Europäisches Patentamt

European Patent Office

Office européen des brevets

(11) Publication number: **0 226 103**
A2

## (12) EUROPEAN PATENT APPLICATION

(21) Application number: **86116592.6**

(22) Date of filing: **28.11.86**

(51) Int. Cl.⁴: **G 06 F 15/06**

(30) Priority: **02.12.85 US 803364**

(43) Date of publication of application:
**24.06.87 Bulletin 87/26**

(84) Designated Contracting States:
**DE FR GB IT NL**

(71) Applicant: **ITT INDUSTRIES INC.**
**320 Park Avenue**
**New York, NY 10022(US)**

(72) Inventor: **Morton, Steven Gregory**
**39 Old Good Hill Rd**
**Oxford, CT 06483(US)**

(74) Representative: **Morstadt, Volker, Dipl.-Ing. et al,**
**c/o Deutsche ITT Industries GmbH Patent/Lizenzabteilung**
**Postfach 840 Hans-Bunte-Strasse 19**
**D-7800 Freiburg/Brsg.(DE)**

(54) **Address generation for cellular array processors.**

(57) There is disclosed an array processor consisting of a matrix of processing elements arranged in vertical rows and horizontal columns. Each row has the ability to generate an address that is potentially different from the address generated in all other rows. Accordingly, each row in the processor contains a dedicated address processor which address processor is coupled to the data processor in each row as well as to a memory. In this manner, the address control of the address processor and the memory in each row is determined by the state of the data processor in that row. Based on such structure, the number of applications that the processor may handle is increased by the ability to have different addresses generated in each of the separate rows.

EP 0 226 103 A2

S.G. ?????? - ?
F1 1309 E? S?/b?
November 27, 1986
0226103

ADDRESS GENERATION FOR CELLULAR ARRAY PROCESSORS

## BACKGROUND OF THE INVENTION

Cellular array processors are known and consist of arrays of relatively simple processors or cells wherein each cell can access its neighboring cells in both the vertical and horizontal directions. Such processors are arranged in M columns and N rows with each cell associated with a column and row and connected to its neighboring cells in both the vertical and horizontal directions.

Cellular array processors operate upon parallel data streams, simultaneously to obtain high throughput. While a conventional uni-processor operates on one data item at a time in a sequential manner, a cellular array processor can operate on many data objects simultaneously. For this to be useful, the data objects must be of the same type for any individual instruction so that it is meaningful to supply the same sequential instruction stream to operate simultaneously on these data objects. This particular class of processor is known as a single instruction multiple data (SIMD) processor.

A cellular array processor may consist of a rectangular array of single bit or multiple bit computers which may be implemented in LSI. Each of the units for example may have memory, either internal or external to the processor chip, which may consist of a great number of bits as from 2K to 64K bits. These cellular elements obey the same instructions simultaneously, each operating on its own data. The cells can intercommunicate in all four directions with their neighbors and also with external data input and output registers. Thus the array can be applied to problems requiring extremely complicated mathematical processes such as matrix arithmetic, vector calculations, image processing, pattern recognition, as well as many other applications.

In any event, there are many examples in the prior art of SIMD parallel processors which are widely known such as the Goodyear MPP and the ICL DAP, as well as the NCR GAPP chip and NTT AAP chip. The Burroughs ILLIAC IV, unlike the aforementioned machines, operates in bit parallel on 8-bit, 32-bit, or 64-bit words. Each of its 64 processor units has an index register and an address adder that may modify an address that is broadcast from a central control, called the Memory Service Unit. It does not provide the concurrent, independent address and data computation described herein, nor does it provide the independent, data dependent, enabling of writing to memory as described herein.

Essentially, an SIMD parallel processor also consists of an array of processing cells which are arranged in a rectangular matrix. The array is controlled by means of a controller which has coupled to it a program memory. The controller operates to decode the instructions and causes the processor to perform as required. The selection of the memory address for the entire parallel portion of the processor is implemented via an array address generator which is directed by the controller to provide an address to the memory.

It is important to note that cellular array processors typically operate in a bit serial fashion, i.e., one bit after another. As such, it is uneconomical to provide separate addressing of the 1-bit memory for each processor. The processor described herein works on a word-parallel basis, e.g., 16-bit words, and separate addressing is not only economically feasible but simplifies the programming model for the machine and increase the number of applications for which the machine is suited.

In this manner those cells which are enabled by means of horizontal and vertical masks or internal masking means are the cells that will be active. In regard to such structures there exists a single address generator whose output is used by all of the memory associated with the processor array. For a particular example let us assume that a processor array consists of sixteen 16-bit processors. Each of these processors would have N words of memory behind it. The address generator generates a single address which would be used by all sixteen memories to fetch or store an operand.

Furthermore, all memories would operate regardless of whether a READ operation or a WRITE operation is performed. The parallel processor structure is particularly suitable where the word size in the processor array bears no particular relationship to the word size of the address required. The processor array could also be imagined as consisting of 256 single bit processors arranged in the configuration of sixteen rows by sixteen columns, in which case one could imagine fetching a plane of bits from the memory rather a collection of words.

In this case, in the event that certain of the processors are inactive, the only way to avoid writing into a memory location that should not be written into is to perform a READ-MODIFY-WRITE operation. Accordingly, all memory locations are read and when data is to be written for those processors that are inactive, the very same data that was read is returned to those memory locations. Whereas for the active processors, the new data is returned instead.

Having to do or perform a READ-MODIFY-WRITE operation takes two cycles whenever one would like to perform a single WRITE cycle thereby slowing down the processor. This is a typical problem with cellular array processors.

Another difficulty is that a failure in the address generator or in the address bus from the address generator throughout the memory results in a failure of the entire processor. Thus a single point failure can cause the loss of the entire machine. Furthermore, if the processor is particularly large, the distribution of the address from the single address generator throughout the machine can be very time consuming either complicating the circuit design to minimize the speed impact or simply by slowing down the speed of the machine.

A third difficulty which further restricts the use of such parallel processing architecture is that the programs must be written wherein only a single address is sufficient for fetching the data for all processors. One type of program that is not amenable to such an architecture is a tree-search algorithm, where in such a tree-search algorithm, each processor is searching through a tree in its memory. Each branch of the tree has a pointer which points to the next branch to be searched, in which case one has different pointers being used throughout the machine, but in the case of a single address generator that clearly cannot occur unless the trees are searched one at a time wasting the capability of the parallel processor.

A further difficulty is that if one desires to perform address generation where the address is derived from the data somewhere in the processor array, a selection mechanism must be implemented wherein a particular processor contributes its data that is then loaded into the address generator. Implementation of the selection mechanism is difficult and the time for the data transfer further slows down the machine and as such is rarely used.

Additionally, if the word size of the processor differs from the word size of the address generator, there is a difficulty in translation between word sizes. Furthermore, since a row of a processor may have a collection of words in it, that is, a 16-bit row could be imagined as having two 8-bit processors contained within it, there is a translation problem wherein bits on the left of the processor array would need to be communicated to the least significant part, that is to say to, bits on the right half of the address generator, and this translation further complicates the structure. Suffice it to say, that a major limitation in the parallel processor architecture is the technique used for addressing the particular cells. This technique results in the above noted difficulties and hence severely compromises the speed at which the machine can perform arithmetic or other logical operations.

It is, therefore, an object of the present invention to provide a processor array with distributed addressing where accordingly each of the processor elements in a particular row is associated with its own address generator. In this manner parallel tree-search algorithms can be performed to therefore afford rapid operation in a more reliable manner as well as many algorithms that are common place on conventional uni-processors.

## BRIEF DESCRIPTION OF THE PREFERRED EMBODIMENT

In a processor array of the type including a plurality of processing elements arranged in a matrix of M columns by N rows, said elements connected to neighboring elements in said rows and columns, the improvement therewith wherein each row of said array includes at least one address processor coupled to said processing element in said row and a memory coupled to said address processor and said processing element whereby said address processor can communicate with both said processing element and said memory.

## BRIEF DESCRIPTION OF THE FIGURES

Figure 1 is a block diagram of an SIMD array processor with distributed addressing according to the principles of this invention.

Figure 2 shows a schematic diagram showing a binary tree search which can be implemented by the processor of Fig. 1.

Figure 3 is a schematic diagram depicting a parallel N-tuple tree search which can be implemented by the processor of Fig. 1.

Figure 4 is an alternate embodiment showing an array processor with distributed addressing and sequential address and data processing.

Figure 5 is a diagram showing mapping variables into a memory linear array.

Figure 6 is a table depicting mapping variables into a memory for a square data array in row order.

Figure 7 is a diagram depicting mapping variables into memory for a square data array in column order.

Figure 8 is a table showing mapping variables into a memory for a cubic matrix.

Figure 9 is a block diagram of a 16-bit CPU which can be employed in this invention.

Figure 10 is a simplified block diagram of the CPU shown in Fig. 9.

Figure 11 is a block diagram of WRITE-ENABLE logic according to this invention.

Figure 12 is a block diagram showing a typical processor row configuration utilized in this invention.

Figure 13 is a simplified block diagram of a system controller which can be employed in conjunction with this invention.


DETAILED DESCRIPTION OF THE FIGURES

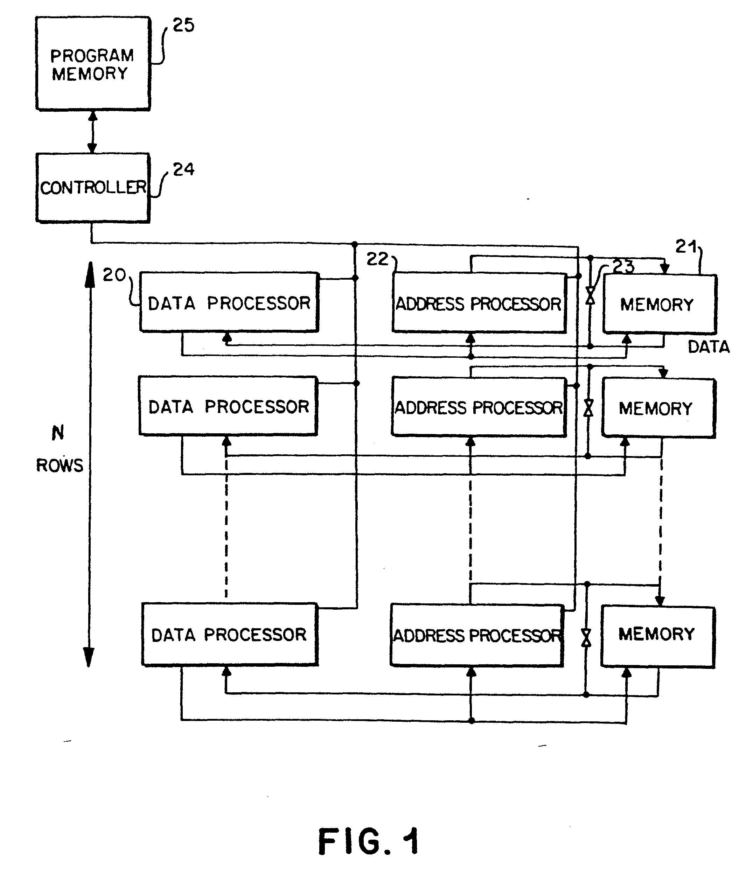

Referring to Fig. 1, there is shown an array processor with distributed addressing according to this invention

The array processor consists of a plurality of data processors, each one arranged in a row. The data processors are separate individual processing elements, and many configurations are available.

Referring to Fig. 1, there is shown that each row of the processor contains not only a data processor 20 but also contains a memory as memory 21 and an address processor 22. In each row the address processor 22 sends an address to the memory and the data from the memory is returned to the data processor 20 or may be loaded through a bidirectional buffer 23 back into the address processor. As one can see from Fig. 1, each row of the processor array contains the same elements--namely, the data processor, the address processor and the memory.

The entire array is controlled by means of a controller 24 which is associated with a program memory 25. The controller and program memory are conventional components and are employed in prior art parallel type processors. In addition an output from the data processor 20 is directed to both the address processor 22 and the memory 21. The data processor may be of the type having the ability to flexibly turn itself on and off as opposed to the type having external horizontal masks and vertical masks or a simple, 2-bit internal masking means for processor selection.

For an example of the type of processor which can turn itself on and off or activate and deactivate according to input data, reference to a co-pending application entitled ARRAY REORGANIZATION WITH INTERNAL CELLULAR CONTROL AND PROCESSING filed on November 13, 1985 by S. G. Morton, the inventor herein. For purposes of explanation of operation let us first assume that the number of words contained in a row of the processor is one. For example imagine that an array consists of sixteen rows where each row has a single 16-bit data processor as processor 20.

Further assume that it is sufficient to have 64K words of memory associated with that row of the processor in which case the address processor is also sixteen bits wide. Assuming that the data processor 20 and the address processor 22 are of the same width facilitates the passing of information between them, since it is often necessary to generate an address that is based on data.

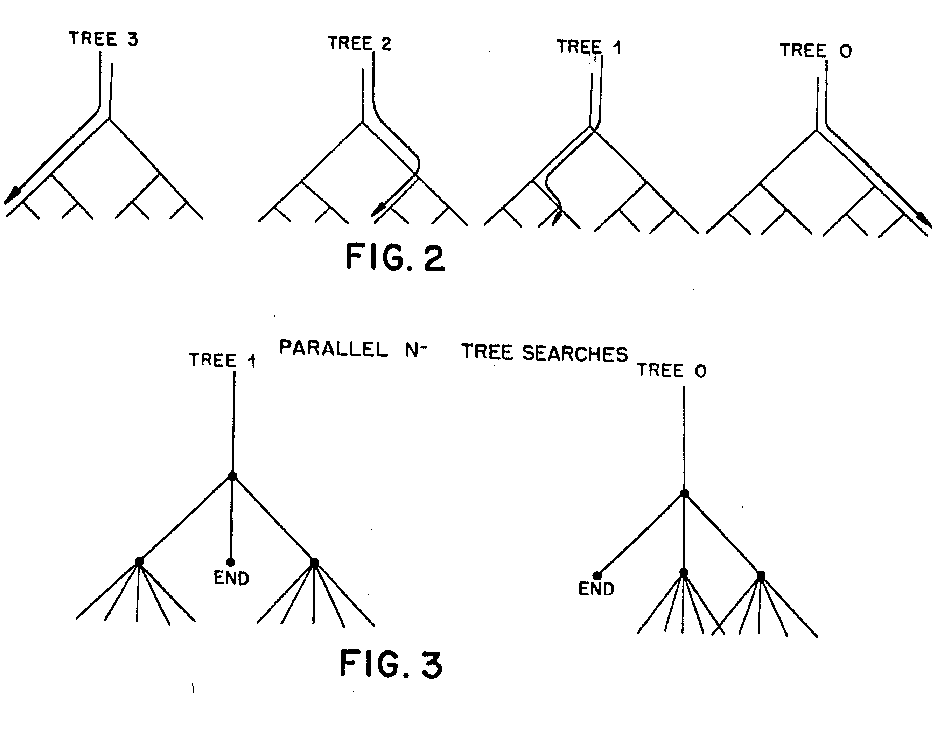

In the structure of Fig. 1, each row has its own address processor as processor 20 and therefore, a parallel tree-search algorithm may be implemented. An example of such a parallel tree-search algorithm is shown in Fig. 2. As seen from Fig. 2, each row follows a binary tree. Each branch of the tree has a pointer to the next branch and all trees may be searched simultaneously or different branches may be searched in each row of the processor.

Thus referring to Fig.2, there is shown the parallel binary tree searches indicating tree 0, tree 1, tree 2 and tree 3. The nature of the searches is depicted clearly in the diagram. As one will understand, each row follows a binary tree as indicated where each branch of the tree points to the next branch. Different branches may be searched in each row of the processor.

Referring to Fig. 3, there is shown an extension of N-tuple branches where some of the branches are deadends. It is noted that because an address processor is local to a single row, if that address processor fails, then only that row is affected, in which case one can build a processor with spare rows to compensate for one or more rows that is defective.

Furthermore, since the address processor is local to the row, the length of the interconnect from the address processor to the memory is minimized thereby further improving performance. Depending upon which data processors are active, different rows will be active in different combinations of processing. In any event, it becomes necessary to slave the address processor as processor 22 to the data processor 20; since in a conventional application, that is to say a program running on a single instruction single data machine, if a data condition were detected wherein a program jump would be made then clearly the address computation would not be performed in the section of codes that were jumped around.

The analogous situation is that if the data processor 20 is inactive, that is to say not performing an execution, then likewise the associated address processor should be inactive as well. Furthermore by using the activity bit to control the memory, memory WRITES may be turned off rather than having to do READ-MODIFY-WRITE operations to handle the cases where the processors are inactive.

A more difficult case is where the width of the data processor 20 is not the same as the width of the address processor. For example, it may be necessary to do 32-bit data arithmetic but only 16-bit address arithmetic since only 64K words of memory would be required by that row. In that case when the data processor 20 generates an address based upon the data, only the lower order bits of the word need to be passed to the address processor 22.

A more complex case is where the width of the data processor is desired to be less than the width of the address processor. In the extreme case, suppose one wanted a data processor that was a single bit wide whereas an address processor was sixteen bits wide. Since a row would surely contain a multiplicity of such 1-bit data processors, the question is how to handle a multiplicity of data processors with a single address processor. This case is in fact analogous to the conventional architecture where a single address generator handles a multiplicity of rows and columns in a processor array.

Imagine that each variable has its own address. Then there is a large body of applications that may be performed by the machine where if one is constrained by having more than one variable per address, the number of applications is substantially reduced. In order to solve this problem and to minimize the amount of hardware, one utilizes a multiplicity of registers in the address processor. Thus if there is a collection of registers in the address processor then each may be assigned to each variable in a data processor.

For example if there are sixteen registers in the address processor and if the data processor is used as a single 16-bit machine, sixteen address registers would be available. On a sliding scale, if the data processor were being used as two 8-bit processors then one could imagine that half of those address registers would be available to each of the processors. In the extreme case if there were sixteen single bit variables in the data processor, one could imagine that a single register in the address processor is assigned to each one of those bits of the data processor. The number of bits in the address processor would be unchanged. What would happen is that the performance would go down because multiple memory cycles would have to be executed, that is one memory cycle for each of the variables in the data processor.

However, it is desired to have complete generality in the address calculations of each of the variables in the data processor then this solution represents the minimal hardware. Otherwise a full address processor would have to be provided for each variable in the data processor and this could represent a very large machine with relatively poor cost/performance ratio.

Hence it is an object to provide a machine wherein the number of bits in a data processor is relatively large, typically 16- or 32- bits or more and that an entire address processor may be assigned to it.

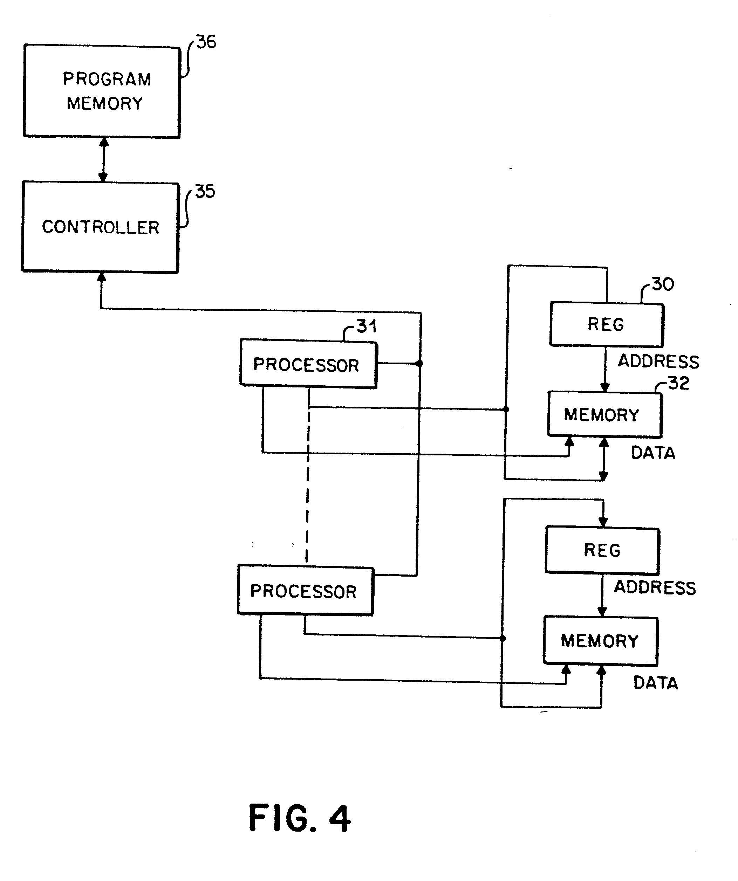

Referring to Fig. 4, there is shown an alternative structure. In Fig. 4, in an effort to reduce costs, each row of the processor utilizes its output bus in a time division multiplex fashion. Therefore, when a memory cycle is performed, each row of the processor output data loads a register as register 30 associated with processor

31. Therefore, when a memory cycle is performed, each row of the processor outputs data which loads a register as 30 which will store the address to the memory 32. In the following cycle data is transferred to or from the memory 32.

The use of time division multiplexing for transmission of both address and data on the same bus is a conventional architecture in the case of many microprocessors. The major difference here is that these are not independently controlled microprocessors, but these processors are operating a single instruction multiple data fashion and are all slaved to a single controller as controller 35 which is associated with program memory 36.

The system shown in Fig. 4 is less complex than a system shown in Fig. 1, but performance is also less since there is a single bus between each row of the processor and its memory. This bus must carry first address then data whereas in Fig. 1 there are separate address and data buses in which case the performance of Fig. 1 is up to twice the performance of the circuit shown in Fig. 4.

An additional point is that the number of registers available in Fig. 4 is presumably half the number of registers available in Fig. 1. If the number of registers per processor, regardless of whether it is an address processor or a data processor is held constant, this has an impact upon the compiler where certain code optimization works better if one has a certain minimum number of registers, and in the configuration of Fig. 4 one will have only half the number of registers available.

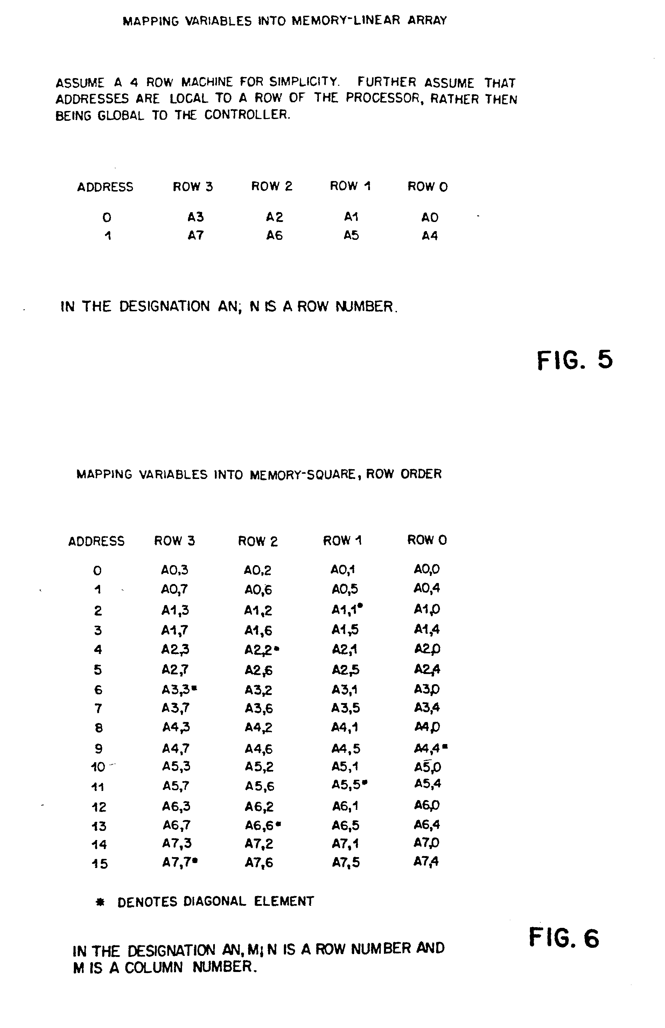

Figures 5,6,7 and 8 show ways of mapping variables into memory. Figure 5 shows a linear array of elements. For simplicity assume there exists a 4-row machine so that two addresses in each row will be required to store all eight variables. In this case simple planar addressing, that is to say a single address for the entire machine is sufficient to access the variables.

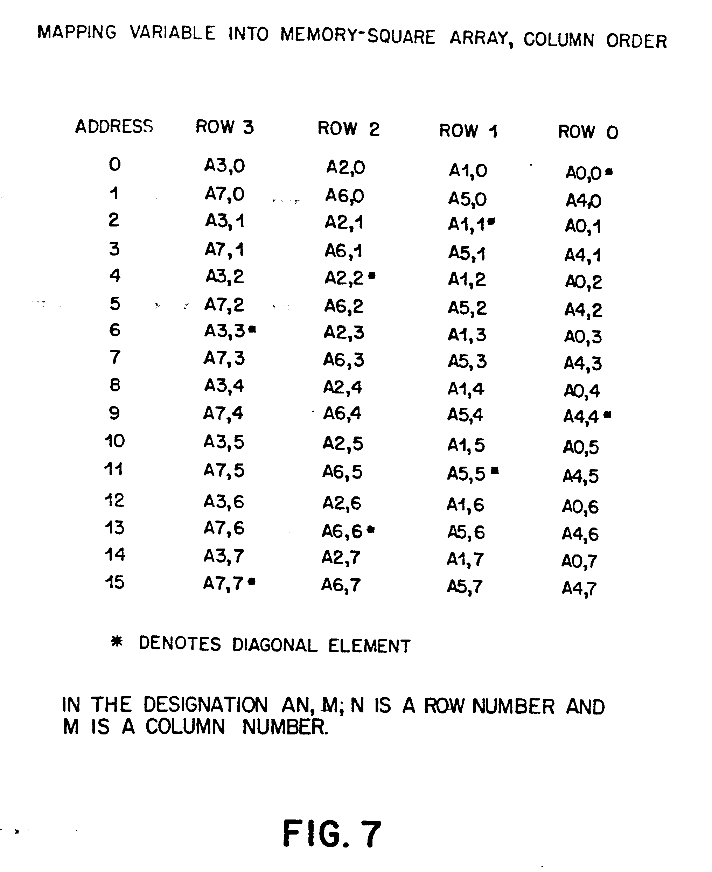

In Fig. 7 a square matrix is shown where again a 4-row machine has been assumed and a 8 by 8 matrix has been assumed. If the matrix can be stored in either row order or column order as shown in Figs. 6 and 7, in either case simple planar addressing is sufficient to access either the elements of a row in the case of Fig. 6 or a column as in the case of Fig. 7. However, should one desire to access the diagonals as is commonly done in matrix inverse operation, this is not possible in a single operation since each processor must have a different address.

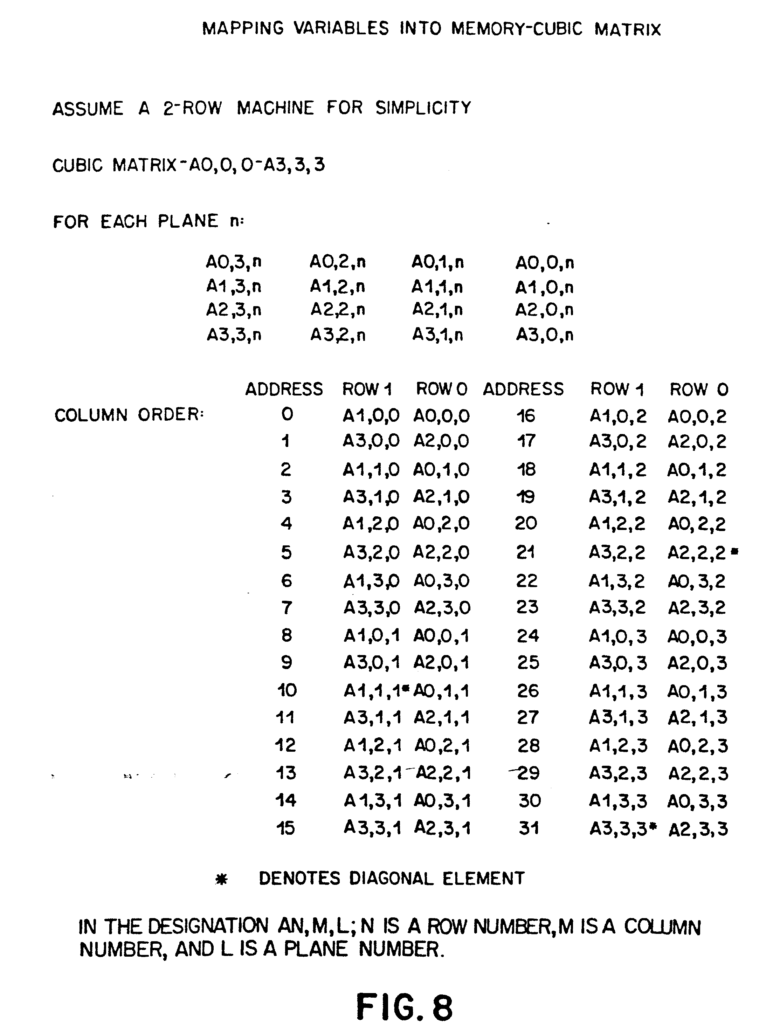

For example in Fig. 6 one would need address 0 in row 0, 2 in row 1, 4 in row 2, and 6 in row 3. In this case having the ability to generate a different address in each row facilitates the accessing of diagonal elements. Likewise, in Fig. 8 where a cubic matrix has been mapped into memory and in this case a 2-row machine and a 4 x 4 matrix has been assumed, one can again determine that accessing diagonal elements is greatly facilitated by having different addresses in each row. In particular row 0 could provide address 0 to get element A 0, 0, 0, and row 1 would provide address 10 to get element A 1, 1, 1.

Figure 2 shows parallel tree searches as may be performed according to this invention. Assume that at each level in the tree, the same test is being performed on all trees. Depending upon the result on those tests, one leg of the tree will be chosen for the subsequent test. As a result of each test, one of two pointers will be followed to direct a processor to the data to be tested at the next level of the tree. Four different paths through the trees have been shown to show that separate addressing in each tree allows independent paths to be taken.

Figure 3 shows parallel N-tuple tree searching. In this example there is a multiplicity of choices at each level in the tree. A collection of tests may be performed at each level in order to decide which of the many branches to follow. Some of the branches may result in deadends at which point the processor would become inactive while other processors continue operating. In any case each processor needs the ability to follow an addressing path particular to the tree that it is on, in which case having a single address for the entire processor prohibits the evaluation of these kinds of structures.

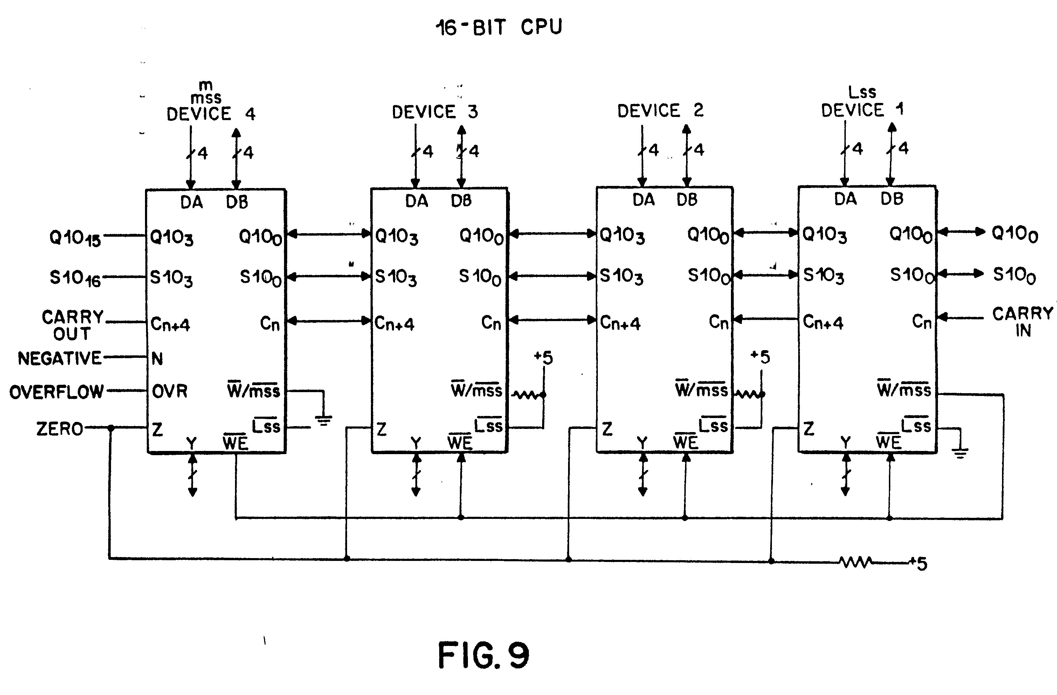

Referring to Fig. 9, there is shown a typical block diagram of a typical 16-bit CPU. The block diagram is similar to the structure available from ADVANCED MICRO DEVICES, 1983 AM2900 FAMILY DATA BOOK, page 557. Essentially Fig. 9 is taken from Fig. 2 on that page. This 16-bit CPU is employed for both the data processor and the address processor as for example shown in Fig. 1 and which is included in each row as data processor 20 and address processor 22.

This 16-bit CPU can be operated to implement both the functions of the address processor 22 and the data processor 20 as depicted in Fig. 1.

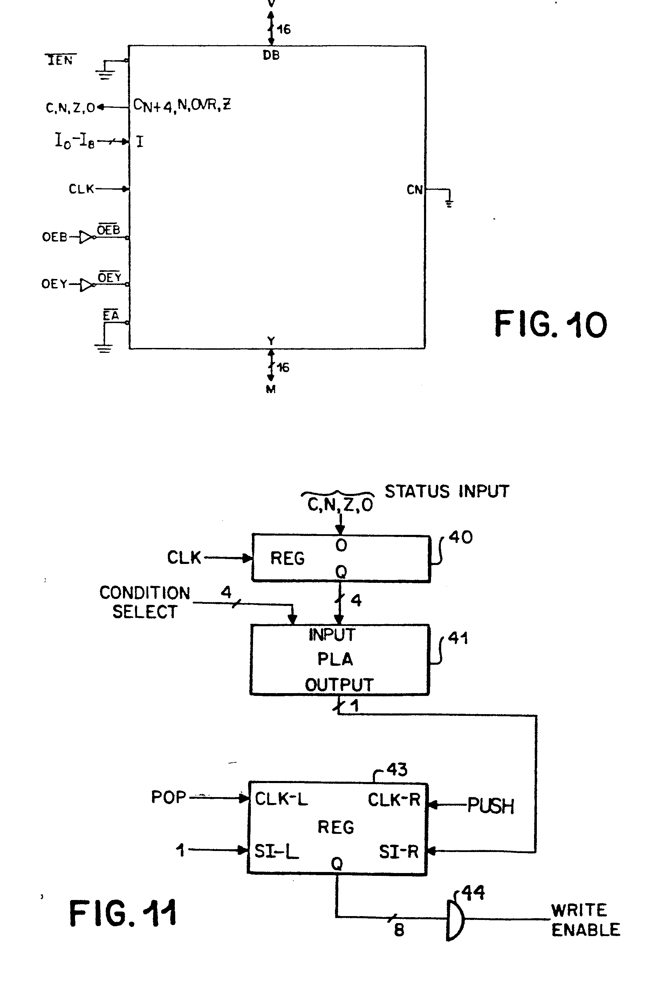

Referring to Fig. 10 there is shown a simplified block diagram of the 16-bit CPU as for example of that configuration shown in Fig. 9. The important points to note are that the vertical bus as shown in Fig. 2 is connected to the DB bus of the 2903's and that the M bus of Fig. 1 is connected to the Y bus of the 2903's. The control signals, WE (WRITE ENABLE), Instruction 0 through Instruction 8 (I0-I8), OUTPUT ENABLE B (OEB), and OUTPUT ENABLE Y (OEY) all come from the controller as controller 24 of Fig. 1 as does the clock.

The important outputs of the chip in addition to the two buses are the four status lines--namely, carry,

14

negative, zero, and overflow which are designated as C, N, Z, O.

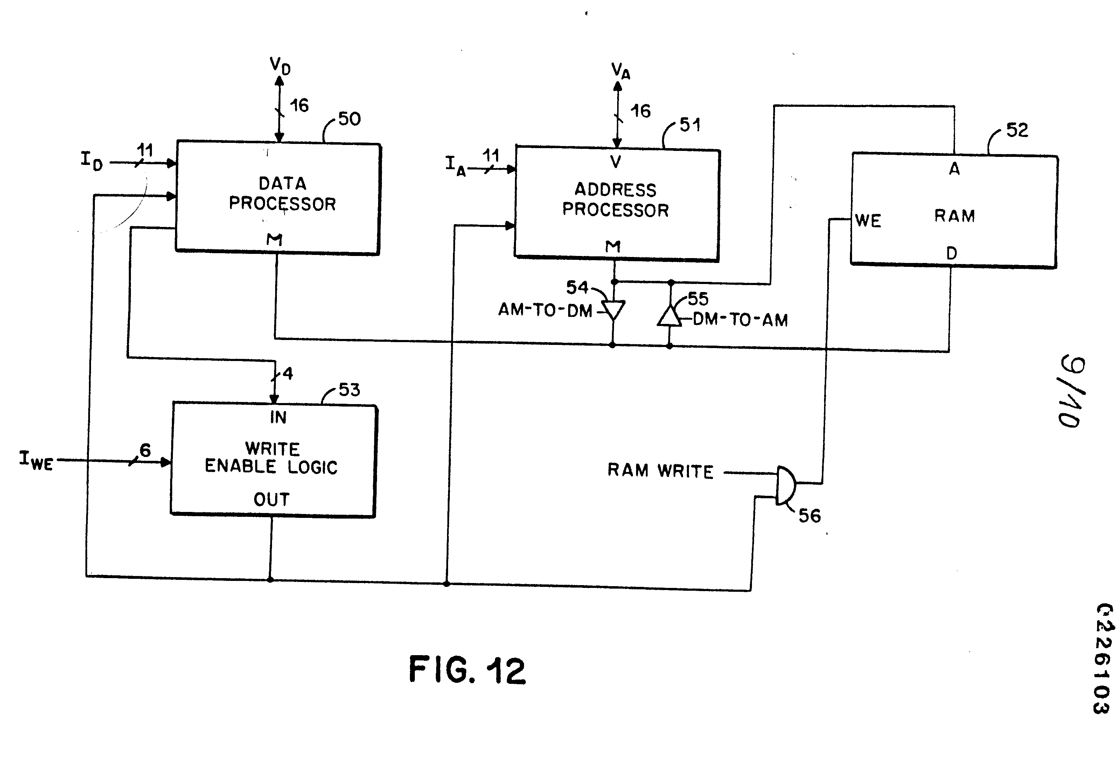

Figure 11 shows the WRITE ENABLE logic necessary to cause proper operation. The primary inputs to this block are the 4 status inputs, the condition select, and the PUSH and POP instructions, and there is a single output designated as WE for WRITE ENABLE. As seen from Fig. 11, the status inputs which are the Carry, Negative, Zero and Overflow are applied to the inputs of a register 40. The output of the register 40 is directed to a programmable logic array 41 which has a 4-input line indicated as condition select. The output from the PLA 41 is directed to an output register which receives a POP signal for shifting to the left and a PUSH signal for shifting to the right. It also includes first and second data inputs which indicate a shift to the right or a shift to the left.

The PLA 41 chooses one set of sixteen test conditions as for example whether the test indicates a value less than zero or greater than zero or zero based on the C, N, Z, and O inputs as selected by the condition selection. Thus the condition selection causes the PLA 41 to output a true condition when a selected combination of the C, N, Z, O inputs occurs.

The processing cell can be an active array, and the structure of the processor cell is well known. See for example a co-pending application entitled ARRAY REORGANIZATION WITH INTERNAL CELLULAR CONTROL AND PROCESSING filed on November 13, 1985 by S.G. Morton, the inventor herein.

In regard to the co-pending application, Figure 4 shows a detailed block diagram of a processor cell as employed in a cellular array or cellular processor. As is shown in the co-pending application, the computation portion of a processor cell consists of a multiport RAM from which two locations may be read simultaneously as selected by the read address and the read/write address, and one location may be written where the location of the write is the read/write address.

The outputs of the multiport RAM go to the A and B inputs of an ALU or arithmetic logic unit. The ALU and multiport RAM are of conventional design as in the AMD 2903. Control to the processor cell emanates in the form of instruction input, the read address and the read/write address, all of which are implemented by means of the controller as 35 of Figure 4.

The output of the ALU is coupled to a buffer whose output is coupled to a multiplexer. Another output of the ALU is connected to another input of the multiplexer. Thus the multiplexer can select either input from the ALU at its output line and direct the contents into a status register.

The status register is coupled to a buffer whose output is coupled to a control input of the multiport RAM. As can be determined from that application, the status register interfaces with a status logic array which is programmable and which may include a microprocessor.

In that structure the above noted C, Carry; N, Negative; Z, Zero; and O, Overflow; are outputs obtained from the ALU as utilized as well in this invention.

The above noted application shows structure which operates to control a RAM write enable signal within each processor cell to enable each cell in an array to obey an instruction after a determination as to whether the cell has been selected. Thus each cell in an array can obey an instruction at the same time. Other cells in an array will be idle for the same instruction. Thus that processor described in the co-pending application is particularly suited to the aspects of this invention.

The output gate 44 determines the active condition of the WRITE ENABLE line by monitoring the bits stored in

register 42 to determine whether or not a processor cell is active or inactive.

Figure 12 shows a row block diagram of an array processor. As one can ascertain from Fig. 12, there is a 16-bit data processor 50 which has a data output coupled to the data input of a RAM 52. The data can also be applied to the RAM 52 via a gate 56. The address processor 51 is also a 16-bit processor and essentially receives its output from the WRITE ENABLE logic unit 53 which contains the logic structure previously described in conjunction with Fig. 11.

As is noted, a main factor in this invention is that a single row in a processor has both an address processor as 51, a data processor as 50, each operating from separate instruction streams. These are shown as 11-bit inputs designated as $I_D$ for the data processor 50 and $I_A$ for the address processor 51. The status outputs of the data processor are used as inputs to the WRITE and ENABLE logic. The WRITE and ENABLE logic then enables the operation of both the data processor 50, the address processor 51 and the random access memory or RAM 52. It is conceivable that the multiplicity of circuits shown in Fig. 12 could comprise a single row, but each one of those sections would be interconnected as shown in the Figure.

It is noted that the address processor 51 has status outputs, but only the status outputs from the data processor 50 are used. This simplifies the programming model of the machine to be consistent with the normal view of the program wherein some operation upon data is performed, and as a consequence of that operation, a program flow may or may not be altered, although in principle, one could likewise use the outputs of the address processor 51 as further inputs to the WRITE ENABLE logic 53 but that will complicate the programming model.

As indicated and shown in Fig. 12, there is a pair of buffers 54 and 55 that enable the transmission of data between the M output of the address processor 51 and the M output of the data processor 50. These buffers as 54 and 55 facilitate the use of the data output of the RAM 52 as input to the address processor 51 and also facilitate the movement of data between the address processor 51 and the processor 50.

In many applications one performs an operation upon data and uses that result to calculate an address. Therefore, an output of the data processor 50 has to be passed to the address processor 51 which would then perform a calculation to generate an address.

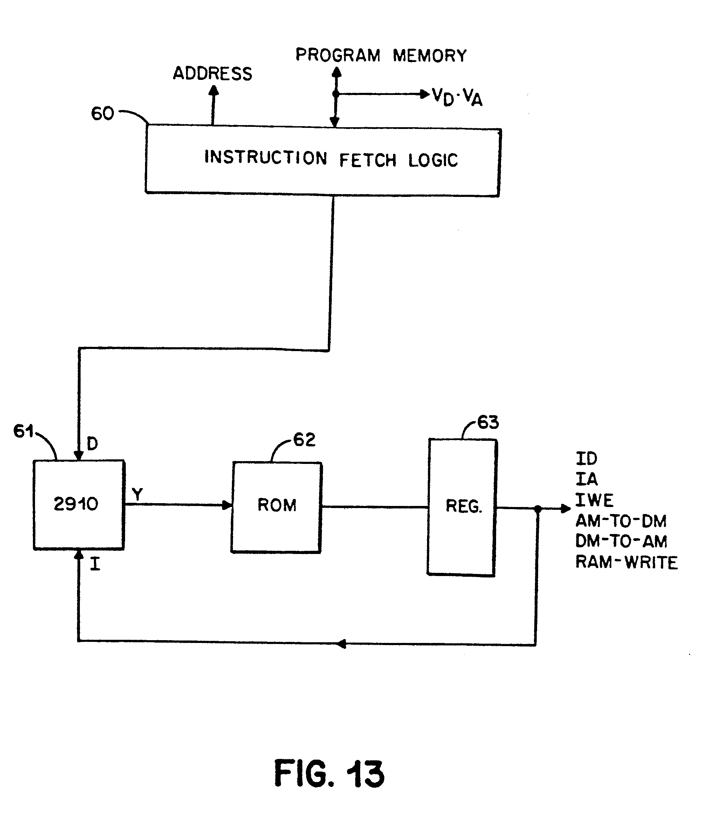

Referring to Fig. 13, there is shown a simple block diagram of a controller as controller 24 of Fig. 1. There exists an instruction fetch logic circuit 60 which consists of a program counter operative to generate an address from which an instruction is fetched from a program memory. The instruction from the program memory is loaded into the instruction register. The output of the instruction register typically goes through a mapping ROM in order to generate a starting address for the microprogram ROM. This address is passed through the D input to the 2910 micro-program sequencer. The Y output of the 2910 addresses the micro-program ROM 62 whose contents drive a register 63 and a few bits are fed back to the 2910 as an instruction to perform the next micro-instruction. It is noted that the 2910 is a conventional micro-sequencer circuit available from AMD and other sources.

The outputs of the register 63 provide the various control lines to the array processor. The two buses designated as VD and VA of the array processor are tied to the program memory so that the data from the program memory may be passed to the buses or so the data may be read from the array processor and loaded back into the program memory. These address buses are shown in Fig. 12 which is the block diagram of the array processor row.

It is, of course, understood that the data processors as well as the address processors and including the controller can be fabricated by utilizing conventional components. It is basically the object of this invention as described above to provide a single-instruction multiple- data processor which includes a plurality of rows. Each of these rows has the ability to generate an address that is potentially different from the address generated in all other rows. The address control of the address processor and a memory in each row is determined by the state of the data processor in that row. The feature being that the number of applications that may be handled is dramatically increased by having different addresses generated in each row. The fault tolerance is improved since there does not exist a single generator whose failure would cause the loss of the entire processor.

Furthermore, the performance is improved because the transmission distance of the address is reduced having it local rather than global. The performance is further improved because the address processor and the data processor may be working simultaneously. The activity of the address processor in a given row is slaved to the activity of the data processor in that row as is the memory associated with each row.

S.G Morton - 9     Sa/scnö  EP 1309 EP
0226103

27.11.86

## Claims:

1. A processor array of the type including a plurality of processing elements arranged in a matrix of M columns by N rows, wherein the elements being connected to neighboring elements in the rows and columns, <u>characterized in</u> that each row of the array includes an address processor (22; 51) coupled to at least one processing element (20; 50) in the row and a memory (21; 52) coupled to the address processor (22; 51) and the processing element (20; 50).

2. The processor array according to claim 1, including means associated with the processing element (20; 50) for transmitting a status signal to the address processor (22; 51) and the memory (21; 52) indicative of the activity of the processing element (20; 50).

3. The processor array according to claim 1 or 2, characterized in that the processing element (20; 50) is capable of handling a given number of bits with the address processor (22; 51) capable of handling the same given number of bits, in particular 16 bits.

4. The processor array according to one of the claims 1 to 3, characterized in that

- the address processor (51) has a serial data input line and an output data line,

- the memory (52), in particular a random access memory (RAM), has an address input (A) coupled to the output data line of the address processor (51) and an output data line coupled to the output data line of the processing element (50) and

- each of the rows includes

-- a first buffer (54) having an input coupled to the output data line of the address processor (51) and an output coupled to the output data line of the processing element (50),

-- a second buffer (55) having an input coupled to the output data line of the memory (52) and an output coupled to the address input line of the memory (52),

-- write enable logic means (53) having an input coupled to a status output of the processing element (50) and having an output coupled to the processing element (50), the address processor (51) and the memory (52) for controlling the transfer of data between the processing element (50), the address processor (51) and the memory (52), to enable the operation of the units during a data processing mode.

5. The processor array according to claim 4 characterized in that the processing element (50) is a data processor having a serial input data terminal.

6. The processor array according to claim 4 including

- a first data bus $(V_D)$ coupled to the processing element (50) for connecting to other processing elements (50) in the array,

- a second data bus $(V_A)$ coupled to the address processor (51) for connecting to other address processors (51) in the array.

- a controller (24;35) for transmitting instruction data to the array and having an output coupled to the first and second data bus $(V_D, V_A)$, and

- a program memory (25;36) coupled to the controller (24, 35) for storing therein instruction data.

7. The processor array according to claim 4, characterized in that the write enable logic means (53) includes a first register (40) having input data lines coupled to the status output data lines of the processing element (50) and having an output directed to a programmable logic array (41) the output of which is coupled to the shift input of a shift register (43) having an output coupled to a gate (44) for generating a write enable signal coupled to the processing element (50), the address processor (51) and the memory (52).

8. The processor array according to claim 6, characterized in that the controller (24;35) includes instruction fetch logic means (60) having an input coupled to the program memory (25;36) and to the first and second data buses ($V_D$, $V_A$), including a program counter to generate an address from which an instruction is fetched from the program memory (25;36), the output of the instruction fetch logic means (60) is coupled to the data input (D) of microprogram sequencer (61) having an output (Y) coupled to a memory (62), in particular a read only memory (ROM), with the output of the memory (62) coupled to the input of a register (63) having an output coupled to an instruction input (I) of the microprogram sequencer (61).

9. The processor array according to claim 8, characterized in that the register output is coupled to the processing element (50), the address processor (51) and the memory (52).

10. The processor array according to claim 4, characterized in that the status output of the processing element (50) comprises the Carry, Negative, Zero and Overflow leads.

FIG. 1

TREE 3    TREE 2    TREE 1    TREE 0

## FIG. 2

PARALLEL N- TREE SEARCHES

TREE 1    TREE 0

END    END

## FIG. 3

0226103

FIG. 4

## MAPPING VARIABLES INTO MEMORY-LINEAR ARRAY

ASSUME A 4 ROW MACHINE FOR SIMPLICITY. FURTHER ASSUME THAT ADDRESSES ARE LOCAL TO A ROW OF THE PROCESSOR, RATHER THEN BEING GLOBAL TO THE CONTROLLER.

| ADDRESS | ROW 3 | ROW 2 | ROW 1 | ROW 0 |
|---------|-------|-------|-------|-------|
| 0 | A3 | A2 | A1 | A0 |
| 1 | A7 | A6 | A5 | A4 |

IN THE DESIGNATION AN; N IS A ROW NUMBER.

### FIG. 5

## MAPPING VARIABLES INTO MEMORY-SQUARE, ROW ORDER

| ADDRESS | ROW 3 | ROW 2 | ROW 1 | ROW 0 |
|---------|-------|-------|-------|-------|
| 0 | A0,3 | A0,2 | A0,1 | A0,0 |
| 1 | A0,7 | A0,6 | A0,5 | A0,4 |
| 2 | A1,3 | A1,2 | A1,1* | A1,0 |
| 3 | A1,7 | A1,6 | A1,5 | A1,4 |
| 4 | A2,3 | A2,2* | A2,1 | A2,0 |
| 5 | A2,7 | A2,6 | A2,5 | A2,4 |
| 6 | A3,3* | A3,2 | A3,1 | A3,0 |
| 7 | A3,7 | A3,6 | A3,5 | A3,4 |
| 8 | A4,3 | A4,2 | A4,1 | A4,0 |
| 9 | A4,7 | A4,6 | A4,5 | A4,4* |
| 10 | A5,3 | A5,2 | A5,1 | A5,0 |
| 11 | A5,7 | A5,6 | A5,5* | A5,4 |
| 12 | A6,3 | A6,2 | A6,1 | A6,0 |
| 13 | A6,7 | A6,6* | A6,5 | A6,4 |
| 14 | A7,3 | A7,2 | A7,1 | A7,0 |
| 15 | A7,7* | A7,6 | A7,5 | A7,4 |

\* DENOTES DIAGONAL ELEMENT

IN THE DESIGNATION AN,M; N IS A ROW NUMBER AND M IS A COLUMN NUMBER.

### FIG. 6

## 5/10

MAPPING VARIABLE INTO MEMORY-SQUARE ARRAY, COLUMN ORDER

| ADDRESS | ROW 3 | ROW 2 | ROW 1 | ROW 0 |
|---------|-------|-------|-------|-------|
| 0 | A3,0 | A2,0 | A1,0 | A0,0 * |
| 1 | A7,0 | A6,0 | A5,0 | A4,0 |
| 2 | A3,1 | A2,1 | A1,1 * | A0,1 |
| 3 | A7,1 | A6,1 | A5,1 | A4,1 |
| 4 | A3,2 | A2,2 * | A1,2 | A0,2 |
| 5 | A7,2 | A6,2 | A5,2 | A4,2 |
| 6 | A3,3 * | A2,3 | A1,3 | A0,3 |
| 7 | A7,3 | A6,3 | A5,3 | A4,3 |
| 8 | A3,4 | A2,4 | A1,4 | A0,4 |
| 9 | A7,4 | A6,4 | A5,4 | A4,4 * |
| 10 | A3,5 | A2,5 | A1,5 | A0,5 |
| 11 | A7,5 | A6,5 | A5,5 * | A4,5 |
| 12 | A3,6 | A2,6 | A1,6 | A0,6 |
| 13 | A7,6 | A6,6 * | A5,6 | A4,6 |
| 14 | A3,7 | A2,7 | A1,7 | A0,7 |
| 15 | A7,7 * | A6,7 | A5,7 | A4,7 |

\* DENOTES DIAGONAL ELEMENT

IN THE DESIGNATION AN, M; N IS A ROW NUMBER AND M IS A COLUMN NUMBER.

# FIG. 7

0226103

## MAPPING VARIABLES INTO MEMORY-CUBIC MATRIX

ASSUME A 2-ROW MACHINE FOR SIMPLICITY

CUBIC MATRIX - A0,0,0 - A3,3,3

FOR EACH PLANE n:

| A0,3,n | A0,2,n | A0,1,n | A0,0,n |
| A1,3,n | A1,2,n | A1,1,n | A1,0,n |
| A2,3,n | A2,2,n | A2,1,n | A2,0,n |
| A3,3,n | A3,2,n | A3,1,n | A3,0,n |

COLUMN ORDER:

| ADDRESS | ROW 1 | ROW 0 | ADDRESS | ROW 1 | ROW 0 |
| --- | --- | --- | --- | --- | --- |
| 0 | A1,0,0 | A0,0,0 | 16 | A1,0,2 | A0,0,2 |
| 1 | A3,0,0 | A2,0,0 | 17 | A3,0,2 | A2,0,2 |
| 2 | A1,1,0 | A0,1,0 | 18 | A1,1,2 | A0,1,2 |
| 3 | A3,1,0 | A2,1,0 | 19 | A3,1,2 | A2,1,2 |
| 4 | A1,2,0 | A0,2,0 | 20 | A1,2,2 | A0,2,2 |
| 5 | A3,2,0 | A2,2,0 | 21 | A3,2,2 | A2,2,2 * |
| 6 | A1,3,0 | A0,3,0 | 22 | A1,3,2 | A0,3,2 |
| 7 | A3,3,0 | A2,3,0 | 23 | A3,3,2 | A2,3,2 |
| 8 | A1,0,1 | A0,0,1 | 24 | A1,0,3 | A0,0,3 |
| 9 | A3,0,1 | A2,0,1 | 25 | A3,0,3 | A2,0,3 |
| 10 | A1,1,1 * | A0,1,1 | 26 | A1,1,3 | A0,1,3 |
| 11 | A3,1,1 | A2,1,1 | 27 | A3,1,3 | A2,1,3 |
| 12 | A1,2,1 | A0,2,1 | 28 | A1,2,3 | A0,2,3 |
| 13 | A3,2,1 | A2,2,1 | 29 | A3,2,3 | A2,2,3 |
| 14 | A1,3,1 | A0,3,1 | 30 | A1,3,3 | A0,3,3 |
| 15 | A3,3,1 | A2,3,1 | 31 | A3,3,3 * | A2,3,3 |

\* DENOTES DIAGONAL ELEMENT

IN THE DESIGNATION AN,M,L; N IS A ROW NUMBER, M IS A COLUMN NUMBER, AND L IS A PLANE NUMBER.

## FIG. 8

16-BIT CPU

FIG.9

0226103

FIG. 10

FIG. 11

FIG. 12

PROGRAM MEMORY

ADDRESS

$V_D \cdot V_A$

60

INSTRUCTION FETCH LOGIC

61
D

2910

Y

62

ROM

63

REG.

I

ID
IA
IWE
AM-TO-DM
DM-TO-AM
RAM-WRITE

FIG. 13